# EUROPÄISCHE PATENTANMELDUNG

(11) **EP 1 895 797 A1**
(43) Veröffentlichungstag der Anmeldung: **05.03.2008**
(21) Anmeldenummer: 06018301.9
(22) Anmeldetag: 01.09.2006
(51) Int. Cl.: H04Q 7/38

(54) **Verbindungsfortbestandsdienst in einem hybriden Netzwerk**

(71) Anmelder: Nokia Siemens Networks GmbH & Co. KG, 81541 München (DE)
(72) Erfinder: Hoffmann, Klaus, 81735 München (DE)
(74) Vertreter: Kley, Hansjörg

(57) **Zusammenfassung**

Ein Dual Mode Engerät (DMH) muss eine Verbindung an einer CS-Domain an eine IP-Domain mittels «Handoff» übergeben können und ebenso auch umgekehrt. Dies stellt dann ein Problem dar, wenn ein einem Dual Mode Endgerät (DHM) zugeordneter B-Teilnehmer eine Anrufumlenkung (Call Forwarding) aktiviert, da beim «Handoff»die Möglichkeit besteht, dass der B-Teilnehmer als B'-Teilnehmer an der anderen Domain die verbindung wieder an sich zieht. Um dies auszuschliessen, wird in der Mobility Call Control Funktion (MCF) der Verbindungsabschnitt Mobility Control Function (MCF) - B-Teilnehmer (leg) dann gelöscht, wenn der B-Teilnehmer einem Dual Mode Endgerät zugeordnet ist und der B-Teilnehmer eine Anrufumlenkung (Call Forwarding) aktiviert hat. Die vorliegende Erfindung leistet jedoch die Verbindungsaufrechterhaltung auch für reine CS/PSTN-Teilnehmer, Voraussetzung ist lediglich, dass die Signalisierung zu den Teilnehmern über eine Mobilty Control Function (MCF) geführt wird.

## Beschreibung

Die vorliegende Erfindung betrifft ein Verfahren für den Verbindungsfortbestandsdienst in einem hybriden Netzwerk gemäss dem Oberbegriff des Patentanspruches 1 sowie ein System zu dessen Durchführung gemäss dem Patentanspruch 9.

Im folgenden wird anstelle einer deutschen Nichtfachsprache die englisch-sprachige Nomenklatur aus den Normen der ITU-T und der IETF benutzt, wie z.B. «IP-Gateway», «Dual Mode» oder «Roaming». Dadurch lassen sich Unklarheiten vermeiden. Ebenso werden allgemein bekannte kurze englischsprachige Begriffe anstelle einer deutschen Nichtfachsprache verwendet wie z.B. «Routing», «Bearer», «Call Forwarding» usw. Eine Liste der verwendeten Abkürzungen, Akronyme und Begriffe am Schluss dieses Dokumentes ist integraler Bestandteil dieser Schrift wie auch die in der Literaturliste angegebenen faktischen Standards; ebenso wird auf das Vokabular gemäss 3GPP TR 21.905 [1] abgestützt.

Der eingangs genannte deutschsprachige Begriff «Sprachverbindungsfortbestandsdienst» ist noch nicht standardisiert. Dieser Begriff lautet gemäss 3GPP TS 23.806 [4] in englischer Sprache «Voice Call Continuity» VCC. Inhaltlich ist unter diesem Begriff beispielsweise in folgendem Kontext zu verstehen: Für ein dual mode Endgerät DMH wird eine Verbindung von einer CS-Domain zu einer IMS-Domain, oder umgekehrt übergeben (manchmal wird auch «Handover» oder «Handoff» verwendet ). Ein ähnlicher aber bei weitem nicht der gleiche Vorgang ist das schon bekannte «Handover» von einer GSM-Zelle in eine andere oder das sogenannte Roaming. Letzteres ist jedoch manchmal mit einem Verbindungsabbruch verbunden, beispielsweise während des Grenzübertrittes durch einen Reisenden, wo das Grenzgebiet durch zwei verschiedene mobile Network Operators mit Telekommunikationsdiensten versorgt wird. Im Kontext dieser Schrift sind die vorstehenden Betrachtungen nicht auf den Sprachdienst allein beschränkt, sondern in dieser Art auch für Multimediadienste - in anderen Worten Videotelefonie oder Video Calls anwendbar. Deshalb könnte in einem allgemeineren Kontext von einem «Multimediaverbindungsfortbestandsdienst» gesprochen werden. Im Folgenden werden im Rahmen dieser Schrift die Begriffe «Sprachverbindungsfortbestandsdienst» und «Multimediaverbindungsfortbestandsdienst» abgekürzt als «Verbindungsaufrechterhaltung» VCC bezeichnet. Das hier im Sinne von 3GPP TS 23.806 [4] verwendete Akronym «VCC» umfasst also den Sprach- und/oder den Videodienst. An dieser Stelle muss jedoch darauf hingewiesen werden, dass die vorgenannten Begriffe «Roaming» und «Handover» sowie der nachstehend noch zu erläuternde Begriff «Handoff» in den Standardisierungsgremien verallgemeinert werden und dadurch nicht mehr so eng gegeneinander abgegrenzt sind wie vorstehend erwähnt. Daher ist auch die Abgrenzung des Begriffes «Voice Call Continuity» VCC nicht mehr so deutlich. Im folgenden Kontext wird jedoch der Begriff «Voice Call Continuity» VCC und die angegebene Übersetzung in deutsch verwendet.

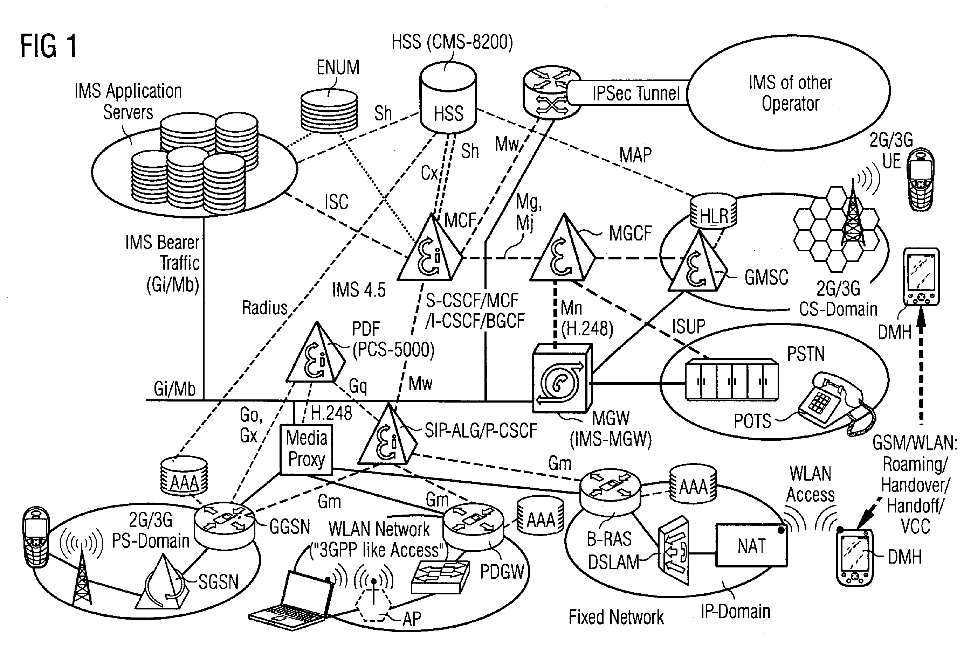

Neuere Kommunikationsarchitekturen sehen die Trennung vermittlungstechnischer Netzwerke in verbindungsdienstbezogene Einheiten und den Transport der Nutzinformationen (bearer Control) vor. Die grundsätzliche Architektur ist in Figur 1 dargestellt. Hieraus resultiert eine Dekomposition/ Trennung von Verbindungsaufbau und Medium- bzw. Beareraufbau. Die Übertragung der Nutzinformationen (Durchschaltung des Nutzkanals) kann dabei über unterschiedliche hochbitratige Transporttechnologien wie z.B. ATM, IP oder Frame Relay vorgenommen werden. Die Steuerung der Media Gateways MG A, MG B können von jeweils zugeordneten Media Gateway Controllern MGC A, MGC B durchgeführt werden. Zur Steuerung der Media Gateways MG A, MG B verwenden die Media Gateway Controller MGC A, MGC B normierte Protokolle, wie z. B. das MGCP Protokoll IETF RFC2705 [2]. Zur Kommunikation untereinander verwenden die Media Gateway Controller MGC A, MGC B ein durch die ITU-T standardisiertes BICC (Bearer Independent Call Control) Protokoll, das aus einer Mehrzahl von standardisierten Proto-kollen gebildet ist und somit eine Protokollfamilie umfasst, siehe dazu ITU-T Q.1912.5 [3].

Die eingangs eingeführte Verbindungsaufrechthaltung VCC bedingt ein Interworking zwischen CS-Domain und IP-Domain (IMS). Mit zunehmender Verbreitung von SIP-Clients und Anwendungen die auch auf PDA's/Handy's - also auf Endgeräten UE - laufen können, die im Rahmen von 3GPP angewendet werden können, entsteht der Bedarf ein Interworking zwischen Endgeräten und verschiedenen CS-Domains unterschiedlicher Eigenschaften herzustellen.

Dies ist insbesondere beim Leistungsmerkmal «Handoff» der Fall. Dieses Leistungsmerkmal kann beispielsweise zwischen dem SIP Protokoll/WLAN Protokoll - in einer IP-Domain - und dem GSM Protokoll - in einer CS-Domain - zur Anwendung kommen. «Handoff» bedeutet hierbei, dass zwei Teilnehmer - also ein SIP/WLAN Teilnehmer und ein beliebiger Teilnehmer - miteinander über ein SIP-Protokoll kommunizieren, und sich der SIP/WLAN Teilnehmer während des Gespräches entschliesst, seine Kommunikation statt über SIP/WLAN über das GSM-Protokoll zu führen; dies wäre damit ein hier so genannter VCC-Teilnehmer, weil (voice) Call Continuity gewährleistet würde. Die Endgeräte müssen hierzu entsprechend ausgebildet sein, d. h. sie müssen beide Protokolle unterstützen (DMH, Dual Mode Handys, GSM/SIP). Die Verbindung wird während des Umschaltevorganges nicht abgebaut. Ein «Handoff» Call bedingt das Signalisieren an eine zentrale Einrichtung im Netz, genau an die Mobility Control Function (MCF), die das Umschalten vom IMS-System von SIP/WLAN zum GSM Endgerät oder vice versa für das beteiligte Endgerät DMH steuert.

Der vorstehend genannte Fall mit dem Dual Mode Endgerät DMH kann jedoch wie folgt verallgemeinert werden: Einem B-Teilnehmer ist wenigstens ein B'-Teilnehmer zugeordnet, dem es erlaubt werden soll, ein Call an den B-Teilnehmer, z.B. über GSM, an sich zu ziehen, z.B. als SIP-Teilnehmer.

Ein exemplarischer Call flow ist in 3GPP TS 23.806 [4] unter «6.2a.2.3.2 CS Origination static anchoring via origination triggers at VMSC; call walk-through» ausgeführt,

Besondere Bedeutung kommt dabei insbesondere dem Dienst «Call forwarding» zu. Entsprechend der Forderungen des 3GPP TR 23.806 V7.0.0 Kapitel 5.2 [4] sollen alle existierende Dienste weiterhin im IMS/CS durchgeführt/zugelassen werden. Wie der «Call forwading» - Dienst, insbesondere im Zusammenspiel mit einem späteren «Handoff call», durchgeführt wird, ist dort nicht erkannt und festgelegt. Dies betrifft auch «Call forwarding» für die CS-Domain eines Dual mode Endgerätes DMH. Damit steht der Dienst für solche Engeräte DMH bzw. UE grundsätzlich nicht zur Verfügung.

Der vorliegenden Erfindung liegt daher die Aufgabe zugrunde, Verfahren für die Verbindungsaufrechthaltung (VCC) für einen Teilnehmer in einem hybriden Netzwerk - also in einer CS-Domain/IP-Domain- anzugeben, das die Verbindungsaufrechterhaltung (VCC) gemäss den vorstehenden Angaben ermöglicht, also auch erlaubt, dass bei einer Anrufumlenkung von einem B-Teilnehmer an einen C-Teilnehmer ein zugeordneter B'-Teilnehmer oder auch der B-Teillnehmer diese Verbindung nicht mehr an sich ziehen kann. Dieser Dienst soll dabei für alle Teilnehmer in einem hybriden Netzwerk offenstehen.

Diese Aufgabe wird für ein Verfahren der eingangs genannten Art durch die im Patentanspruch 1 angegebenen Merkmale gelöst.

Durch das erfindungsgemässe Verfahren, wonach
«die Meldung an die Mobility Control Function für den Aufbau einer Verbindungsanforderung für den Wechsel die Adresse des ursprünglichen Verbindungsabschnittes zwischen Mobility Control Function und B-Teilnehmers enthält und im Fall einer durchgeführten Anrufumlenkung vom B-Teilnehmer zu einem C-Teilnehmer der bestehende Verbindungsabschnitt zwischen Mobility Control Function und B-Teilnehmer aus der Mobility Control Function ausgetragen wird, damit der B- und der B'-Teilnehmer diese Verbindung nicht mehr an sich ziehen können.»;
wird einem B-Teilnehmer der eine Anrufumlenkung aktiviert hat, z.B, im Besetztfall, bei einem «Handoff Call» und einem Versuch für einen «Handover» an die andere Domäne die bestehende Verbindung nicht mehr zugewiesen, sondern diese Verbindung verbleibt korrekterweise beim C-Teilnehmer. Insbesondere leistet die vorliegende Erfindung diesen Dienst VCC auch für PSTN/CS-Teilnehmer, da diese signalisierungsmässig ebenfalls über eine Mobility Control Function geführt werden. Der Dienst ist somit auch offen für B- und B'-Teilnehmer mit dem gleichen Signalisierungsprotokoll. Dies geht unmittelbar mit den Merkmalen des Anspruches aus der Figur 1 hervor.

Das erfindungsgemässe Verfahren erlaubt darüber hinaus, den «Handoff» nicht nur für ein Dual Mode Endgerät DHM in dem beide Protokolle GSM/CS und SIP/IMS/WLAN vereint sind, sondern auch einen «Handoff» für Anwendungen, die auf zwei physikalisch getrennten Endgeräten laufen. Für den Benutzer (unscharf Teilnehmer genannt) ist es somit möglich, den «Handoff Call» von einem Endgerät aus zu initiieren und ganz bequem die betreffende Verbindung an einem anderen (definierten) Endgerät zu übernehmen.

Weitere konkrete Ausgestaltungen der Erfindung sind in abhängigen Ansprüchen enthalten.

Die Erfindung wird nachfolgend anhand der Zeichnung beispielsweise näher erläutert. Dabei zeigen:
- Figur 1: Referenzarchitektur mit Dual mode Endgeräten DMH, die einerseits von einer CS-Domain und andererseits von einer IP-Domain adressierbar sind;
- Figur 2: Meldungssequenz gemäss Fig. A.5.3.-1 aus 3GPP TS 24.206 [7] zur Terminierung in einer CS-domain, wo also der B-Teilnehmer sich in seiner CS-Domain befindet;
- Fig. 3: Darstellung der Signalisierungswege für eine Verbindung von einem A-Teilnehmer zu einem B-Teilnehmer im CS mit Call Forwarding durch den B-Teilnehmers zu einem C-Teilnehmer.

Eine Ausführungsform der vorliegenden Erfindung wird für den Sprachdienst erläutert. Die Erfindung ist jedoch wie eingangs erwähnt nicht auf den Sprachdienst beschränkt, sondern z.B. auch für den Videodienst anwendbar.

Die Figur 1 zeigt eine Referenzarchitektur IMS mit Dual mode Endgeräten DMH - als SIP-Teilnehmer und als PSTN/GSM-Teilnehmer UE. Für das Ausführungsbeispiel wird angenommen, dass der SIP-Client und der GSM Endpunkt in einem Dual Mode Endgeräte DMH der B-Teilnehmer ist. Der A-Teilnehmer ist in dieser Darstellung nicht besonders bezeichnet.

Entsprechend der 3GPP Beschreibung und der ITU-T Beschreibung für Call Forwarding eines CS/PSTN/ISDN Teilnehmers bleibt das MGCF (welches das Interworking von CS/PSTN/ISDN zum IMS hin (und auch umgekehrt) bewerkstelligt), bei der Anrufumlenkung durch einen CS/PSTN/ISDN Teilnehmers in der Verbindung bestehen siehe TS 29.163 V7.0.0 2005-09 und IETF RFC 3398 [6]. Die Mobility Control Function MCF führt dabei eine Liste der Call Abschnitte leg, leg', die zwischen einem Dual Mode Endgerät DMH (hier in diesem speziellen Scenario also der zugeordneten B-Teilnehmer einerseits) und der Mobility Control Function MCF andererseits bestehen. Anstelle des Begriffes Call Abschnitt ist auch der Begriff verbindungsabschnitt leg gebräuchlich. Der Call Abschnitt selbst kann einerseits explizit durch eine sogenannte Callabschnittsidentification leg, die eigens durch die Mobility Control Function MCF vergeben wurde, und dem B-Teilnehmer signalisiert wird, identifizeirt werden, oder implizit durch die Verwendung der Adresse des B-Teilnehmers oder auch implizit durch eine Kombination der Adressen des B-Teilnehmers und des A-Teilnehmers der Verbindung. Es ist möglich, dass das Dual Mode Endgerät DMH mehrere Calls parallel hat, z.B. 3PTY , Dreierkonferenz, etc. Bei Empfang einer SIP Meldung 181 «call is being forwarded» würde ohne die vorliegende Erfindung in der Mobility Control Function MCF geschehen, dass dieser Abschnitt «leg» bei einem Handoff/Handover INVITE von diesem Tln weiterhin zum Umsteuern/Handover benutzt wird und daher zu einer falschen Verbindung führt, also nicht zum C-Teilnehmer im Fall einer Anrufumlenkung.

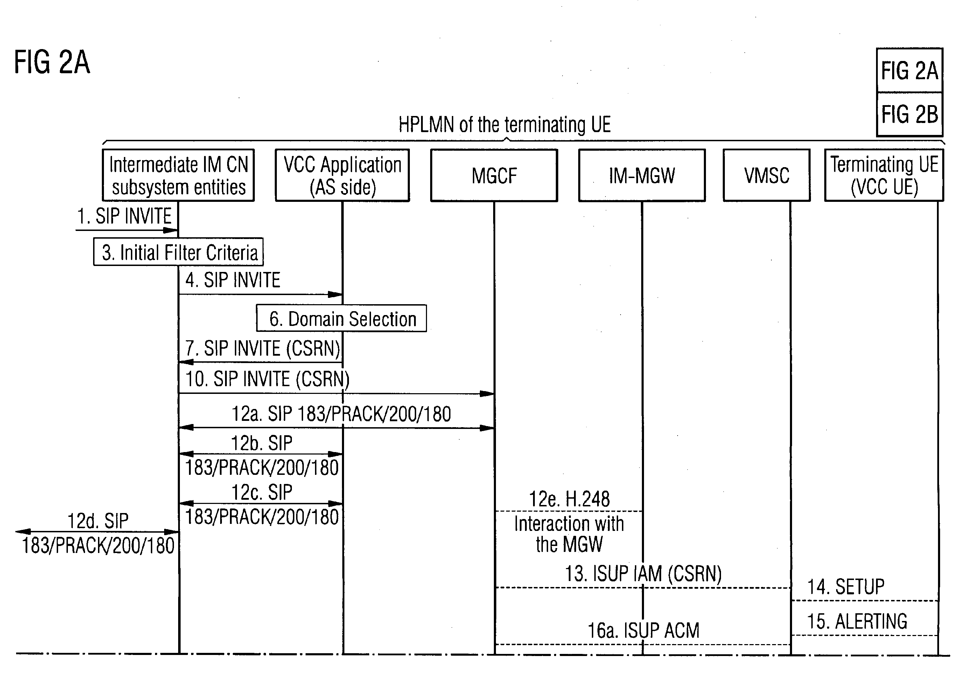

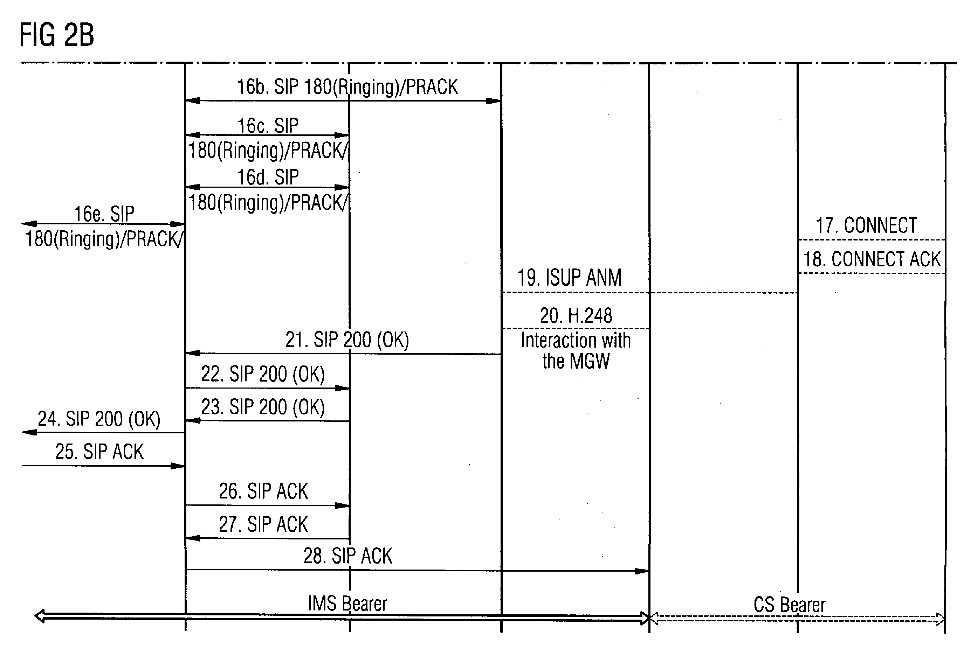

Die Figur 2 enthält einen Meldungsfluss, der zeigt, wie die MCF (hier VCC application As side genannt) bestimmt, wo der B-seitig ein DMH-Teilnehmer ist (roaming). In diesem Meldungsfluss ist festgestellt worden, dass dieser B-Teilnehmer als Dual Mode Endgerät ausgebildet ist und im CS zu erreichen ist. Deswegen erfolgt eine Meldung INVITE zum MGCF.

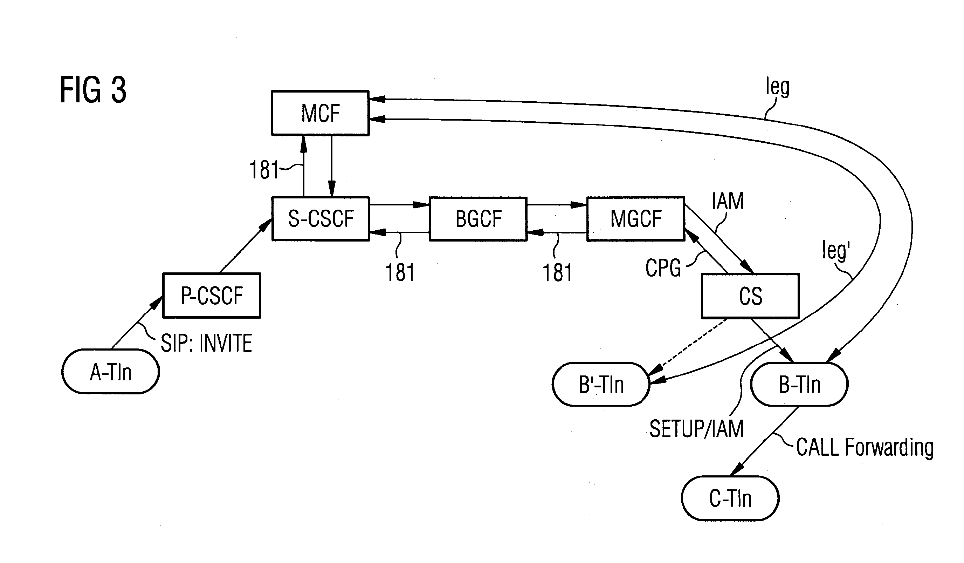

Im reinen SIP-Protokoll Fall, bei dem es dem SIP-Teilnehmer möglich ist, durch die Signalisierung eines 3xx responses (als Antwort auf die INVITE) dem vorherliegenden Voice application server und der Mobility Control Function MCF den Forwardingwunsch für diesen Call mitzuteilen, ist dies hingegen anders als im Fall CS-Domain. Dadurch wird im reinen SIP/IMS Fall gemäss dem SIP-Protokoll das «leg» zum ursprünglich gerufenen Teilnehmer - also dem B-Teilnehmer -auch wieder abgebaut. «Leg» heisst hier: Signalisierungsabschnitt zwischen B-Teilnehmer und S-CSCF/MCF, vgl. auch Figur 3. Dadurch würde auch ein im Call path liegende Mobility Control Function MCF (auch CCCF/NeDS genannt) auch aus dem dem Call path (=Verbindungsabschnitt) genommen. Mit dem Abbau des Legs wird natürlich auch der Eintrag der Abschnitte in der Liste in der Mobility Control Function MCF gelöscht, und dieser B-Teilnehmer kann dann naturgemäß für diesen Abschnitt keinen «Handoff Call» durchführen. In [4] Fig. &.2a,2.3-1 ist ein Callaufbau von einem Dual Mode Endgerät DMH beschreiben, dies Dual Mode Endgerät DMH ist in [4] als «UE IMS, CS» bezeichnet. Es liegt nun in Figur 3 der Fall vor, wonach ein Dual Mode Endgerät DMH angerufen wird, und dass eine Anrufumlenkung (=call forwarding CFNR, CFB) in der CS-Domain erfolgt. Dann würde, falls das Dual Mode Endgerät DMH in der CS-Domain die Anrufumlenkung durchführt, ein MGCF dies mit 181 «call is being fowarded» in Rückwärtsrichtung anzeigen. D.h. die Mobility Control Function MCF wird erfindungsgemäß ihre Buchführung bezüglich der calls, die möglicherweise später durch einen «Handoff Call» umgeschaltet werden können müssen, entsprechend ändern und diesen Call aus ihrer «Buchung» entfernen. Anders ist es jedoch bei einem CS-Teilnehmer, der ja durch die Media Gateway Control Function MGCF an die Mobility Control Function MCF des IMS angebunden ist. Obwohl der CS-Teilnehmer nicht mehr in der Verbindung ist, bleiben diese umgelenkten Calls ja standardgemäß weiterhin im CS/GSM PSTN Netzen im Call path (=verbindungsabschnitt) bestehen, da sie nicht mit der 3xx ausgelöst werden. Damit besteht jedoch das Problem im den Mobility Control Function MCF, dass ohne weitere Festlegung und Definition der Mobility Control Function MCF nun sehr wohl diesen DMH-Teilnehmer der umlenkt aus seiner Buchführung nehmen muss, obwohl das Leg zum Dual Mode Endgerät DMH über die Media Gateway Control Function MGCF noch besteht. Denn, wenn er diesen B-Teilnehmer nicht aus seiner Buchführung herausnimmt, dann würde nach dem gegenwärtigen Verfahren, die Mobility Control Function MCF später bei einem «Handoff Call» durch das Dual Mode Endgerät DMH diesen «Call leg», weil das Dual Mode Endgerät DMH ja noch einen anderen Call parallel zu dem umgelenkten gehabt haben könnte, möglicherweise den längst nicht mehr am CS Endgerät aktiven Call (da ja umgelenkt und keine Instanz mehr im Endgerät vorhanden) fälschlicherweise beim «Handoff» umsteuern, und der falsche Teilnehmer, das heisst der ursprüngliche B-Teilnehmer und nicht den C-Teilnehmer (ziel des Call forward) wieder miteinander verbunden werden. In der Darstellung der Figur 3 erfolgt natürlich die Signalisierung nach der Anrufumlenkung nicht mehr über den B-Teilnehmer, die Angabe «Call forwarding» weist lediglich auf den Ursprung des «Call forwarding» hin.

Um dieses Problem zu lösen, wird - um «Call forwarding» für ein Dual Mode Endgerät DMH durchführen zu können - folgendes Verfahren vorgeschlagen:

Die Mobility Control Function MCF untersucht die 18x und 200 OK SIP responses (nur für responses von der MGCF, da für IMS clients die umlenken dies mit der 3xx tun, und den dazugehörigen MCF ja schon mit dieser Nachricht explizit aus der Verbindung «signalisiert» haben), zur INVITE, in dem er die SIP Header, und die signalisierungsmeldungen des RFC3261/RFC4244 und die Signalisierungsmeldungen des SIP drafts «call diversion information» untersucht, um zu erkennen, ob einer der Umlenkenden also ein B-Teilnehmer ist, der in der SIP Signalisierung empfangen wurde, und ein einem Dual Mode Endgerät zuzuordnenden Teilnehmer ist. Daher ist dieser B-Teilnehmer also nicht mehr aktiv in der Verbindung, sondern nun ein C-Teilnehmer gemäss der Darstellung in Figur 3. Daher entfernt die Mobility Control Function MCF den damit verbundenen Call path aus der Buchführung, weil dieser Teilnehmer für diesen Call path ja gar kein «Handoff» mehr durchführen darf.

**Tabelle 1: Darstellung der Behandlung von 181/18x/20x - Meldungen gemäss RFC4244 bzw. RFC3261 [10] /RFC3398 [6] und dem Industriestandard «Diversion Indication in SIP draft-levy-sip-diversion-08» [9].**

| | | |
|---|---|---|
| | SIP Information element RFC4244 [5] IETF standard | SIP Information element call diversion, industry standard zusammen mit dem RFC3261/RFC3398 [7], wonach 181 «call is being fowarded» das call forwarding anzeigt. |
| MCF empfängt | 18x, 20x für einen Call der zum DMH geroutet wurde. Hi-target-to-uri of the last History-Info entry; siehe 4.3.1. User Agent Client in RFC4244 | 181 für einen Call der zum DMH geroutet wurde. |
| | | |
| Erläuterung | Dies entspricht der ISUP Redirection number, welches anzeigt wohin umgelenkt ist. Damit erkennt der MCF dass der DMH welcher ursprünglich angerufen wurde den Ruf umgelenkt hat. | Dies entspricht der ISUP Nachricht dass umgelenkt wurde. Damit erkennt der MCF, dass das Dual Mode Endgerät DMH welches ursprünglich angerufen wurde den Ruf umgelenkt hat. |
| | | |
| | Deshalb muss dieser Call aus der MCF-DMH Buchführung entfernt werden. | Deshalb muss dieser Call aus der MCF-DMH Buchführung entfernt werden. |

Die vorstehend aufgeführte Behandlung der Meldung 181 ist nicht abschliessend und somit ist die Erfindung nicht darauf beschränkt. Eine analoge Behandlung einer solchen Meldung mit dem Inhalt «Call is being forwarded» (vgl. auch in [6]) ist auch für andere Protokolle möglich.

Die vorstehenden Ausführungen beziehen sich auf die Signalisierung. Um einem anderen Teilnehmer B' den «Handoff Call» zu ermöglichen ist in einer bevorzugten Ausführungsform zusätzlich vorgesehen:
Der B-Teilnehmer, z,B, über das Protokoll SIP angerufen, hat in seinem Endgerät eine Liste von B'-Teilnehmernummern, denen es erlaubt sein soll, eine Verbindung durch «Handoff» an sich zu ziehen. Damit diese B'-Teilnehmer (genau deren Personen) wissen, dass sie eine Verbindung an sich ziehen können, wird durch eine Benutzerinteraktion vom B-Teilnehmer eine Meldung, z.B. SMS oder Gruppen-SMS oder eine Instantmessage, etc, an die B'-Teilnehmer gesandt mit den Informationen über den Verbindungsabschnitt zwischen dem Teilnehmer und der Mobility Control Function MCF. Darüber hinaus ist es erforderlich, dass dem B-Teilnehmer die entsprechenden Verbindungsabschnitte leg bekannt sind. Diese Verbindungsabschnitte leg werden wie vorstehend erwähnt von der Mobility Control Function MFC erzeugt und geführt. Aus der Signalisierung heraus wird vom B-Teilnehmer zusätzlich seiner B-Teilnehmernummer der Verbindungsabschnitt leg in der vorgenannten SMS mitgegeben. Dazu ist es ferner erforderlich, diese Dienst-SMS von einer gewöhnlichen Benutzer-SMS unterscheiden zu können. Dies kann dadurch erfolgen, dass das Endgerät des B-Teilnehmers einen Prefix in das SMS einfügt. Dazu kann eine Kodierung verwendet werden, wie sie beispielsweise in ETSI TS 100 900 [8] definiert ist. Mit dem Empfang der verbindungsabschnitt Identifikation leg kann ein B'-Teillnehmer bei einem «Handoff /Handover call» der Mobility Control Function MCF mitteilen welcher Callabschnitt von B nach B' gewechselt werden soll.

Zusätzlich kann vorgesehen werden, dass die Mobility Control Function MFC eine Liste von B'-Teilnehmern führt, die einen «Handoff» bezüglich eines bestimmten B-Teilnehmers überhaupt durchführen dürfen. Diese Liste wird also pro Teilnehmer geführt und kann via ein Subscriber Management Verfahren aufgrund der Angaben zum betreffenden Teilnehmer eingebracht werden. Die Erlaubnis zu einem «Handoff» einer Verbindung zu einem Teilnehmer wird dann nicht generell, sondern eben verbindungsbezogenen durch die vorgenannte SMS einem oder mehreren B'-Teilnehmern mitgeteilt. Diese B'-Teilnehmer bilden dann eine Untermenge der in der vorgenannten Liste geführten Teilnehmer.

Mit einem Signalisierungstransport des Verbindungsabschnittes leg zu einem B-Teilnehmer bzw. B'-Teilnehmers ist insbesondere auch der Vorteil verbunden, dass der Anstoss eines «Handoff» nicht auf ein physikalisches Endgerät beschränkt bleibt.

**Liste der verwendeten Bezugszeichen, Akronyme; Glossar**

| | |
|---|---|
| 3GGP | 3rd Generation Partnership Project http://www.3gpp.org |
| BGCF | Breakout Gateway Control Function |
| CCCF | Call Continuity Control Function |
| CFB | Call Forwarding Busy |
| CFNR | Call Forwarding No Reply |
| CPG | Call Progress |
| CS | Circuit Switched |
| CSCF | Call Server Control Function |
| DMH | Dual Mode Handset; Dual Mode Endgerät |
| I-CSCF | Interrogating Call Server Control Function CSCF |
| IAM | Initial Address Message |
| IMS | IP Multimedia Subsystem |
| IP | Internet Protokoll |
| ISDN | Integrated service digital network |
| ISUP | ISDN User Part |
| ITU-T | Telecommuncation Standardization sector of ITU |
| LE | Line Exchange; Ortsvermittlungsstelle |
| MG | Media Gateway |
| MCF | Mobility control function |
| MGC | Media Gateway Control |
| MGCF | Media Gateway Control Function |
| MGW | Media Gateway |
| MSC | Mobile Switching Center |
| NeDS | Network Domain Selection |
| P-CSCF | Proxy CSCF |
| PSTN | Public switched telecommunication network |
| RF | Rating Function |
| RFC | request for comment |
| S-CSCF | Serving Call Server Control Function CSCF |
| SE | Service Element |
| SIP | Session Initiation Protocol |
| SIP-Subs | SIP-Subscriber und SIP-Client werden synonym verwendet |
| SS | Subsystem, auch IMS IP multi media subsystem genannt |
| Subs | Subscriber; Teilnehmer |
| TX | Transit Exchange; Transitvermittlungsstelle |
| UE | User Equipment |
| VCC | Voice Call Continuity; Sprachverbindungsfort-bestandsdienst, Multimediaverbindungs-fortbestandsdienst; Verbindungsaufrechthaltung |
| VMSC | Visited MSC |

### Literaturliste

- [1]: 3GPP TR 21.905 3rd Generation Partnership Project; Technical specification group services and system aspects; vocabulary for 3GPP specifications (release 7)
- [2]: IETF RFC2705 Media Gateway Control Protocol (MGCP) Version 1.0. M. Arango, A. Dugan, I. Elliott, C. Huitema, S. Pickett. October 1999, Obsoleted by RFC3435, Updated by RFC3660.
- [3]: ITU-T Q.1912.5 Interworking between Session Initiation Protocol (SIP) and Bearer Independent Call Control protocol or ISDN User Part
- [4]: 3GPP TS 23.806 3rd Generation Partnership Project; Technical Specification Technical Specification Group Services and System Aspects; Voice Call Continuity between CS and IMS Study (Release 7)
- [5]: IETF RFC 4244 An Extension to the Session Initiation Protocol (SIP) for Request History Information M. Barnes, Ed. Nortel; November 2005.
- [6]: IETF RFC 3398 Integrated Services Digital Network (ISDN) User Part (ISUP) to Session Initiation Protocol (SIP) Mapping G. Camarillo, Ericsson; A. B. Roach, Dynamicsoft; J. Peterson, Neustar; L. Ong; Ciena; December 2002
- [7]: 3GPP TS 24.206 V0.6.0 (2006-07) Voice Call Continuity (VCC) between the Circuit-Switched (CS) domain and the IP Multimedia (IP) Core Network (CN) subsystem; (Release 7)
- [8]: ETSI TS 100 900 V7.2.0 (1999-07) Digital cellular telecommunications system (Phase 2+); Alphabets and laguage specific information
- [9]: Diversion Indication in SIPdraft-letry-sip-diversion-08 archiviert bei www.softarmor.com: http://www.softarmor.com/wgdb/docs/draft-levy-sip-diversion-08.txt
- [10]: IETF RFC 3261 SIP: Session Initiation Protocol J. Rosenberg, dynamicsoft; H.Schulzrinne, Columbia University G. Camarillo, Ericsson; A. Johnston, WorldCom; J. Peterson, Neustar; R. Sparks, dynamicsoft; Handley, ICIR; E. Schooler, AT& T June 2002

## Patentansprüche

1. Verfahren zur verbindungsaufrechthaltung (VCC), wobei ein in einem IP Multimedia Subsystem (IMS) eine Mobility Control Function (MCF) vorhanden ist und dass für einen Wechsel einer Verbindung vom einem B-Teilnehmer (UE, DHM) zu einem B'-Teilnehmer eine Meldung (Setup/INVITE) an die Mobility Control Function (MCF) für den Aufbau einer Verbindungsanforderung gesandt wird und **dadurch** der B'-Teilnehmer berechtigt wird, die bestehende Verbindung mit dem B-Teilnehmer an sich zu ziehen;
**dadurch gekennzeichnet, dass**
die Meldung (Setup/INVITE) an die Mobility Control Function (MCF) für den Aufbau einer Verbindungsanforderung für den Wechsel die Adresse des ursprünglichen Verbindungsabschnittes (leg) zwischen Mobility control function (MCF) und B-Teilnehmers enthält und im Fall einer durchgeführten Anrufumlenkung (CFU, CFNR, CFB) vom B-Teilnehmer zu einem C-Teilnehmer der bestehende Verbindungsabschnitt (leg) zwischen Mobility control function (MFC) und B-Teilnehmer aus der Mobility Control Function (MCF) ausgetragen wird, damit der B- und der B'-Teilnehmer diese Verbindung nicht mehr an sich ziehen können.

2. Verfahren nach Anspruch 1,
**dadurch gekennzeichnet, dass**
der B-Teilnehmer und der B'-Teilnehmer in einem Dual Mode Endgerät (DMH) vereinigt sind und der Wechsel der Verbindung vom packetvermittelten Netzwerk (IP-Domain, WLAN) an das leitungsvermittelte Netz (CS-Domain, GSM) oder umgekehrt erfolgt.

3. Verfahren nach Anspruch 1 oder 2,
**dadurch gekennzeichnet, dass**
eine weitere Meldung (SMS) vom B-Teilnehmer zum B'-Teilnehmer gesandt wird, in der der Verbindungsabschnitt (leg) zwischen Mobility control function (MFC) und B-Teilnehmer enthalten ist.

4. Verfahren nach Anspruch 3,
**dadurch gekennzeichnet, dass**
in der Mobility control function (MFC) eine Liste pro B-Teilnehmer geführt wird, in der diejenigen B'-Teilnehmer enthalten sind, die eine Berechtigung haben, eine Verbindung vom B-Teilnehmer zu sich zu ziehen.

5. Verfahren nach Anspruch 4,
**dadurch gekennzeichnet, dass**
die weitere Meldung (SMS) an eine Teilmenge der in der pro B-Teilnehmer geführten Liste gesandt wird und dass nur die mit der weiteren Meldung (SMS) adressierten B'-Teilnehmer eine Verbindung vom B-Teilnehmer an sich ziehen können.

6. Verfahren nach einem der Ansprüche 3 bis 5,
**dadurch gekennzeichnet, dass**
die weitere Meldung (SMS) als Dienst-SMS ausgebildet ist und nach ETSI TS 100 900 codiert ist, um diese weitere Meldung von einer gewöhnlichen Benutzer-SMS unterscheiden zu können.

7. Verfahren nach Anspruch 2,
**dadurch gekennzeichnet, dass**
die Meldung an die Mobility Control Function (MFC) die Angabe enthält, dass dem B-Teilnehmer ein Dual Mode Endgerät (DMH) zugeordnet ist.

8. Verfahren nach einem der Ansprüche 1 bis 7,
**dadurch gekennzeichnet, dass**
die Meldung an die Mobility Control Function (MFC) nach dem SIP-Protokoll gemäss RFC4244/RFC3261 eine 18x-Meldung ist, die das Austragen des Verbindungsabschnittes (leg) in der Mobility Control Function (MFC) bewirkt.

9. System mit Mitteln zur Durchführung der Schritte des Verfahrens nach einem der Ansprüche 1 bis 8.
